# EUROPEAN PATENT APPLICATION

(11) **EP 3 361 381 A1**
(43) Date of publication of application: **15.08.2018**
(21) Application number: 17155700.2
(22) Date of filing: 10.02.2017
(51) Int. Cl.: G06F 9/48, G06F 9/50

(54) **METHOD FOR MIGRATING A NETWORK SERVICE AND NETWORK SERVICE ARRANGEMENT**

(71) Applicant: NTT DoCoMo, Inc., Tokyo 100-6150 (JP)
(72) Inventor: TRIAY MARQUES, Joan, 80687 Munich (DE); KUNZMANN, Gerald, 80687 Munich (DE); SOUVILLE, Bertrand, 80687 Munich (DE); KUREBAYASHI, Ryosuke, Tokyo 100-6150 (JP); KHAN, Ashiq, Tokyo 100-6150 (JP)
(74) Representative: Viering, Jentschura & Partner mbB Patent- und Rechtsanwälte

(57) **Abstract**

According to one embodiment, a method for migrating a network service is described comprising providing a network connectivity service using first computing, network and/or storage resources, providing access to said network connectivity service provided by the first computing, network and/or storage resources for one or more communication devices via one or more service access points, configuring second computing, network and/or storage resources to provide at least a part of said network connectivity service, configuring said one or more service access points to provide access to said network connectivity service provided by the second computing, network and/or storage resources and de-allocate at least a part of the first computing, network and/or storage resources from providing said network connectivity service.

## Description

The present disclosure relates to methods for migrating a network service and network service arrangements.

Network functions virtualization (NFV) is a network architecture concept that uses the technologies of IT virtualization to virtualize entire classes of network node functions into building blocks that may connect, or chain together, to create communication services. NFV relies upon traditional server-virtualization techniques. A virtualized network function, or VNF, may be provided by one or more virtual machines or virtual containers running different software and processes, on top of standard high-volume servers, switches and storage devices, or even cloud computing infrastructure, instead of having custom hardware appliances for each network function.

The need may arise to migrate virtualized network functions to other resources, e.g. other hardware, e.g. for maintenance or the need of more powerful resources. Approaches for such a migration are desirable which keep the effort for such a migration low. Virtualized network functions can be arranged into network services. Network services can further be characterized to fulfil connectivity services, thus also referred therein as network connectivity services.

According to one embodiment, a method for migrating a network service is provided comprising providing a network connectivity service using first computing, network and/or storage resources, providing access to the network connectivity service provided by the first computing, network and/or storage resources for one or more communication devices via one or more service access points, configuring second computing, network and/or storage resources to provide at least a part of the network connectivity service, configuring the one or more service access points to provide access to the network connectivity service provided by the second computing, network and/or storage resources and de-allocating at least a part of the first computing, network and/or storage resources from providing the network connectivity service.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows an NFV Management and Orchestration Architecture according to ETSI (European Telecommunications Standards Institute).
- Figure 2: illustrates a network service (NS).
- Figure 3: illustrates NS migration by creating a new NS.
- Figure 4: shows a NS to be migrated.
- Figure 5: shows an extension of the NS of figure 4 for NS migration from a first site to a second site.
- Figure 6: shows a rewiring of a NS for migration of the NS.
- Figure 7: shows a cropping of a NS for migration of the NS.
- Figure 8: shows a NS resulting from a partial NS migration.
- Figure 9: shows a flow diagram illustrating a method for migrating an NS.
- Figure 10: shows a network service arrangement.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In traditional solutions, the operator network architecture is typically integrated vertically over proprietary hardware platforms. Network operators can estimate future traffic demands based on the lifecycle process of network deployments, and then the network operators can follow up with network equipment procurements and deployments. In some cases, the network operators may realize that some expected demands do not materialize, thereby leaving relatively large blocks of capacity unused. At the same time, other demands may exceed the network operator's original estimation, thereby causing major degradation to user experience. Therefore, the traditional network operator business model, which is based on vertically integrated hardware, has a number of issues, such as an increased, shorter hardware lifecycle, increasing complexity in integration, the inability to scale resources based on traffic demands, etc.

NFV (Network Functions Virtualization), formed in the European Telecommunications Standards Institute (ETSI) Industry Specification Group (ISG), is aimed to address various drawbacks faced by network operators. NFV can be seen to include evolving standard information technology (IT) virtualization technology to consolidate network equipment types (e.g., MMEs (Mobility Management Entities)) onto industry standard high volume servers, switches and storage. NFV involves implementing network functions (e.g., MME functionality) in software, which can run on a range of commercial off-the-shelf (COTS) server hardware. The virtualized network function software can then be moved to, or instantiated in, various locations in the network when needed without having to install new equipment. NFV is in contrast to legacy networks, in which network function (NF) implementations are tightly coupled with the infrastructure on which the network functions are run.

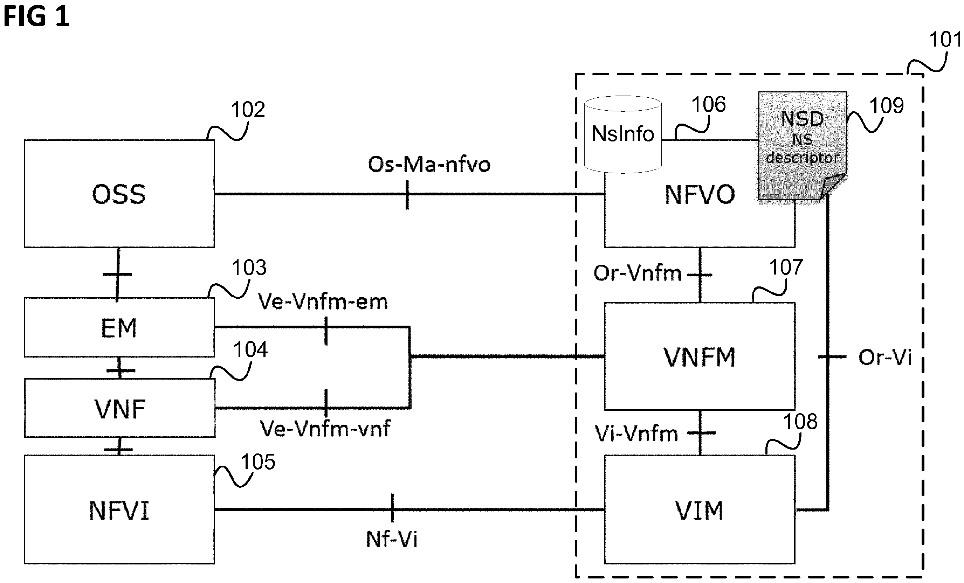

Figure 1 shows an NFV Management and Orchestration Architecture according to ETSI.

A network deployment can include a non-virtualized portion, which for example corresponds to traditional non-virtualized 3GPP network elements. Further, the network deployment can include a virtualized portion that is operable following NFV principles. In other words, non-virtualized network elements and virtualized network elements can be co-located in the mixed wireless network. In the mixed wireless network, the network operator can operate both physical network functions (PNFs) and virtualized network functions (VNFs).

The NFV architectural reference includes an NFV management and orchestration (NFV-MANO) element 101 that serves as the platform for managing and orchestrating the diverse NFV entities.

The NFV architectural framework further includes an OSS (Operations Support System) 102, an EM (Element Manager) 103, a VNF (Virtual Network Function) 104 and an NFVI (Network Function Virtualization Infrastructure) 105.

The OSS 102 refers to the OSS of a network operator. OSS 102 deals with traditional network and service management, including fault management, configuration management and performance management.

A VNF 104 is the basic block in the NFV architecture. It is the virtualized network element. For example when a router is virtualized, the network element provider can implement it as a VNF. Another example of network element that can be virtualized is a packet gateway. A network element can also be partially virtualized, in which case one or more sub-functions of a network element is (are) virtualized, which are then also delivered as VNF. For example in the router case, various sub-functions of the router can be separate VNFs which together function as virtual router.

A VNF 104 can be seen as a virtualized implementation of an entity performing certain network task, where such an entity formerly carried out such tasks by proprietary, dedicated hardware. A VNF 104 moves network functions out of dedicated hardware devices and into software. This allows specific functions that required hardware devices in the past to operate on standard (e.g. x86) servers. In an implementation manner using compute resources in the form of virtual machines (VMs) or virtual containers, VNFs 104 carry out specific network functions on VMs under control of a hypervisor. Such network tasks might include firewalling, domain name service (DNS), caching or network address translation (NAT).

Other examples of VNF include GGSN (Gateway GPRS Support Node, GPRS: General Packet Radio Service), SGSN (Serving GPRS Support Node), RNC (Radio Network Control), S/P-GW (Serving/Packet Gateway) of EPC (Evolved Packet Core), etc.

The EM 103 is the element management system for the VNF 104. This is responsible for the functional management of VNF i.e. FCAPS (Fault, Configuration, Accounting, Performance and Security Management). This may manage the VNFs through proprietary interfaces. There may be one EM 103 per VNF 104 or an EM 103 can manage multiple VNFs 104. The EM 103 itself can be a VNF 104.

The NFVI 105 is the environment in which VNFs 104 run. This includes physical resources, virtualized resources and a virtualization layer:
- Compute, Storage and Networking Resources: This is the physical part in NFVI 105. Virtualized resources are instantiated on these physical resources. Any commodity switch or physical server/storage server is part of this category.
- Virtual Compute, Virtual Storage and Virtual Networking Resources: This is the virtual part in NFVI. The physical resources are abstracted into virtualized resources that are ultimately utilized by VNFs.
- Virtualization Layer: This layer is responsible for abstracting physical resources into virtualized resources. A common industry term for this layer is hypervisor. This layer decouples software from hardware which enables the software to have a lifecycle independent from hardware.

The MANO 101 includes an NFV Orchestrator 106 which for example performs on-boarding of new Network Service (NS), VNF Forwarding Graph (VNFFG) and VNF Packages, NS lifecycle management (including instantiation, scale-out/in, performance measurements, event correlation, termination), global resource management, validation and authorization of NFVI resource requests and policy management for NS (Network Service) instances.

The NFV Orchestrator 106 generates, maintains and tears down network services of VNFs 104 themselves. If there are multiple VNFs, the NFV Orchestrator 106 enables creation of end to end service over multiple VNFs.

As an example, assume that there are multiple VNFs 104 which need to be chained to create an end to end service. One example of such case is a virtualized base station and a virtualized EPC with corresponding virtualized core network functions (e.g., MME, SGW, etc.). They can be from same or different vendors. There will be a need to create an end to end service using this set of VNFs 104. This would demand a network service orchestrator to talk to coordinate the instantiation of this set of VNFs 104 in order to create an end to end service.

A network service is managed and orchestrated according to an NS descriptor (NSD) 109. An NS information element (NsInfo) 110 contains information about all components of the a network service.

The MANO 101 further includes a VNFM (Virtual Network Function Manager) 107 which for example performs lifecycle management of VNF instances, and has an overall coordination and adaptation role for configuration and event reporting between NFVI and the Element/Network Management System.

The difference between EM 103 and VNFM 107 should be noted. EM 103 does the management of functional components while the VNFM 107 does the management for the virtual components. As example, in case where a mobile core is virtualized, the EM 103 does the management of the functional part (for example issues related to mobile signalling) while the VNFM 107 does the management for the virtual part (for example issues related to instantiating a VNF itself).

Further, the MANO 101 includes a Virtualised Infrastructure Manager (VIM) 108 which performs controlling and managing the NFVI compute, storage and network resources, within one operator's infrastructure sub-domain and is responsible for collection and forwarding of performance measurements and events related to virtualised resources.

According to NFV, network functions are provided as VNFs wherein, e.g. for a certain customer (e.g. mobile network operator), VNFs as required by the customer (e.g. a router functionality, a firewall functionality etc.), and then arranged together by the network operator in the form of a so-called network service.

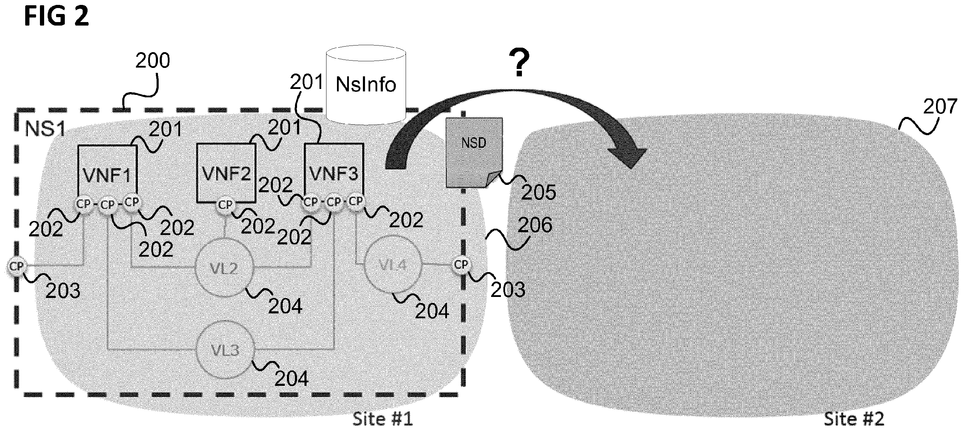

Figure 2 illustrates a network service 200.

The network service (NS) 200 comprises a plurality of virtual network functions (VNFs) 201. Each VNF 201 has one or more connection points 202. The network service 200 has one or more external connection points 203, which may be seen as service access points 203 and allow a customer to access the network service 200. In other words, the network service 200 is provided via the external connection points (service access points) 203. The connection points 202 may be connected to each other and to the external connection points 203 via virtual links 204. It should be noted that an external connection point 203 can be directly connected to a connection point 202 at a VNF 201 or connected via a virtual link 204. The network service 200 may also comprise physical network functions (PNFs).

According to the ETSI NFV IFA specifications,
- VNFs 201 are "always" part of an NS 200. For a VNF 201 to be managed and orchestrated, the NFVO 106 needs to know to which NS 200 the VNF 201 is part of.
- VNFs 201 can be shared among NS instances. In other words, a VNF can be part of an NS1 and NS2 at the same time.
- NS lifecycle management interface operations have support for "adding", "removing", "instantiating" and "terminating" a VNF 201 of an NS 200.
- An NS 200 is managed and orchestrated according to an NS Descriptor (NSD) 205. The NSD 205 describes the types/profiles of VNFs 201, PNFs (physical network functions), Virtual Links (VLs) 204 and VNF Forwarding Graphs (VNFFGs).

The Network Service Descriptor (NSD) 109, 205 is a deployment template which consists of information used by the NFV Orchestrator (NFVO) 106 for life cycle management of an NS 200.

An NS 200 is a composition of Network Functions (NF) arranged as a set of functions with unspecified connectivity between them or with some specified connectivity according to one or more forwarding graphs. The description of a NS 200 as used by the NFV Management and Orchestration (MANO) functions 101 to deploy an NS instance includes or references the descriptors of its constituent objects.

The network service 200 may be provided by means of certain (first) computing, network and/or storage resources 206. This may include certain hardware resources at a certain geographic location (e.g. certain data centre or a certain computer cluster) or as well a certain part of computational, network and storage resources of one or more computers.

It may occur that the network service 200 should be migrated, i.e. should be provided by other (second) computing, network and/or storage resources 207. This may for example be desired by a network operator (e.g. because of a desired different location) or because of a maintenance that should be performed for the computing, network and/or storage resources currently used, their capacity is no longer sufficient, there has been alarm or a failure etc.

So, the issue arises how to migrate the network service 200 from the first computing, network and/or storage resources 206 (e.g. from a first site) to the second computing, network and/or storage resources 207 (e.g. to a second site) without disrupting its usage from the customer's perspective as well as from the perspective of a network operator's management and operations.

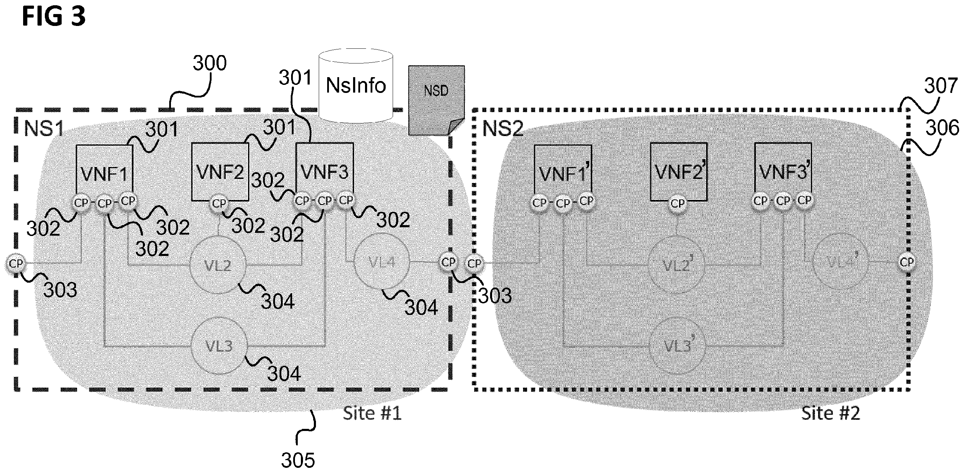

Figure 3 illustrates NS migration by creating a new NS.

A network service (NS1) 300 comprising, as described with reference to figure 2, VNFs 301, (internal) connection points 302, external connections points 303 and virtual links 304 is provided by first computing, network and/or storage resources (e.g. a first site) 305 and should be migrated to second computing, network and/or storage (e.g. a second site) 306.

One approach is to create a new network service (NS2) 307 at the second site 306 which is a duplicate of the network service (NS1) 300 at the first site 305.

Then, the service is switched over to the new network service 307 and the network service 300 and its VNFs 301 are terminated.

For this approach, however, a new NS has to be created and each consumer (e.g. a network operator or a network user, e.g. a mobile network subscriber) has to be switched to the new network service, not only from a user/control plane connectivity perspective, but also from a service operations perspective. Furthermore, all fulfilment procedures for the new NS to be instantiated need to be performed, thus adding management/operations complexity.

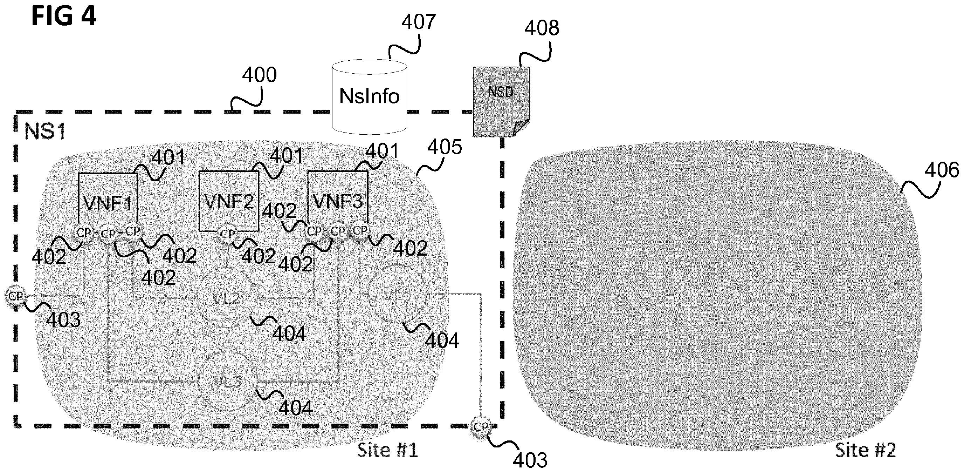

According to various embodiments, a network service is migrated by extending the network service which may be used to avoid this added complexity (as described below in more detail). This approach is in the following described with reference to figures 4 to 7.

Figure 4 shows a network service 400 to be migrated.

The network service (NS1) 400 comprises, as described with reference to figure 2, VNFs 401, (internal) connection points 402, external connections points 403 and virtual links 404 and is provided by first computing, network and/or storage resources (e.g. a first site) 405 and should be migrated to second computing, network and/or storage (e.g. a second site) 406.

An NS information element (NsInfo) 407 contains information about all components of the NS 400. The components are instantiated VNFs 401 and VLs 404 of the NS 404. Alternatively to using the information contained in NsInfo, one could query for all VNFs/VLs that belong to the NS to find out about all components of the NS 400. In addition, an NSD 408 contains description of the NS 400 providing information about its constraints, policies and composition.

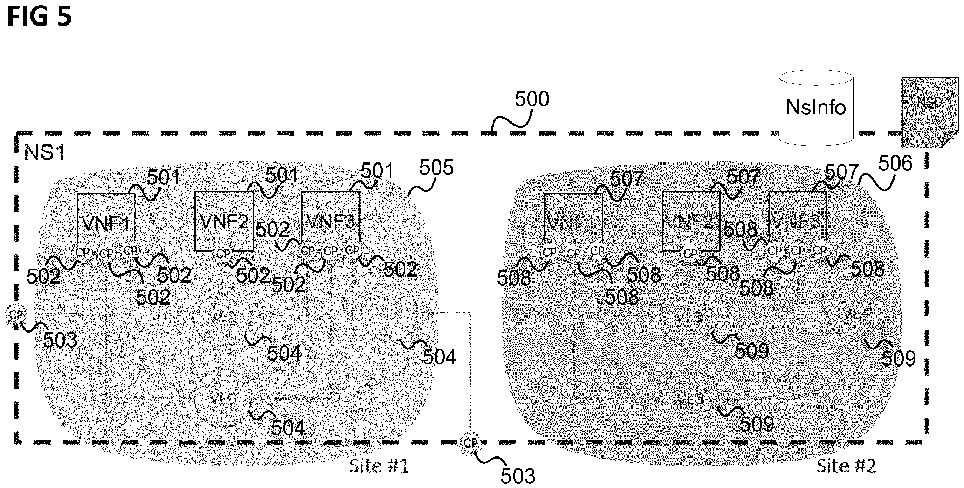

Figure 5 shows an extension 500 of the network service of figure 4 for NS migration from a first site 505 to a second site 506.

The extended NS 500 corresponds to the NS 400 of figure 4 and thus comprises VNFs 501, connection points 502, external connection points 503 and virtual links 504 corresponding to the VNFs 401, connection points 402, external connection points 403 and virtual links 404 of figure 4.

However, the NS 500 is extended with respect to the NS 400 of figure 4 in that new VNFs 507 with connection points 508 and VLs 509 are created at the second site 506 belonging to the same NS 500 (e.g. created and added to the NS 500), i.e. to the same entity, e.g. with the same name and external connection points). The NS 500 can thus be seen to be extended.

The VNFs 507 and VLs 508 at the second site 506 follow the same logical organization as the VNFs 501 and VLs 504 at the first site 505 (and as for example defined by the NS's NSD 511).

It should be noted that the VNFs 507 and VLs 508 may be (e.g. partially) already available at the second site 506 such that their creation is not necessary for migrating the NS 500.

In any case, the NS 500 is extended to cover the components at the first site 505 and the second site 506.

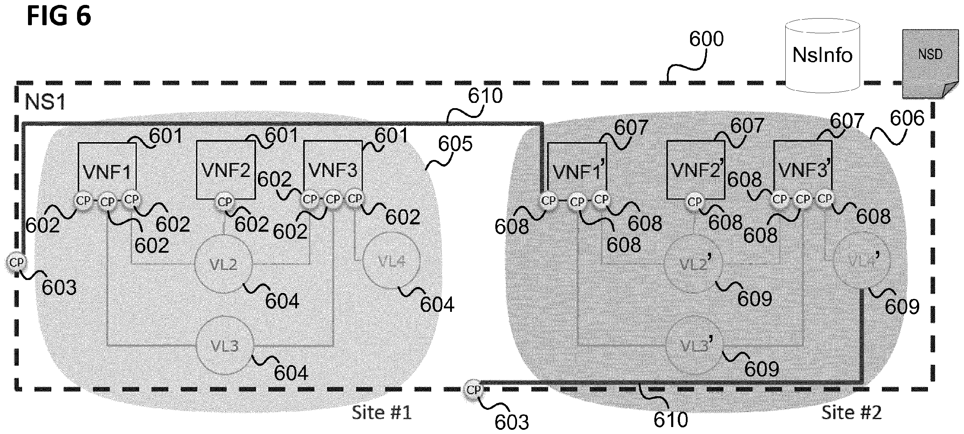

Figure 6 shows a rewiring of a NS 600 for migration of the network service 600.

The network service 600 corresponds to the network service 500 and comprises components 601 to 604 at a first site 605 and components 607 to 609 at a second site 606 as described with reference to figure 5.

For migrating the network service 600 (in the configuration of figure 4) from the first site 605 to the second site 606, the network service 600 is rewired: The external connection points (extCP) or service access points 603 are switched from the VNFs 601 (via the virtual link VL4 for VNF3 in this example) at the first site 605, to which they were originally linked, to link to the corresponding VNFs 607 (via the virtual link VL4' for VNF3' in this example) at the second site 606.

In the example of figure 6, the external connection points 603 originally pointing to connection points 602 of VNF1 and VNF3 (via the virtual link VL4 for VNF3 in this example) are changed to point to connections points 608 of VNF1' and VNF3' 607 (via the virtual link VL4' for VNF3' in this example) at the second site 606.

Thus, connections 610 are established between the external connection points 603 and the connections points 608 of VNF1' and VNF3' 607 (via VL4' for VNF3').

Furthermore, application and service state information may be transferred from components of the first site 605 to the corresponding components of the second site 606.

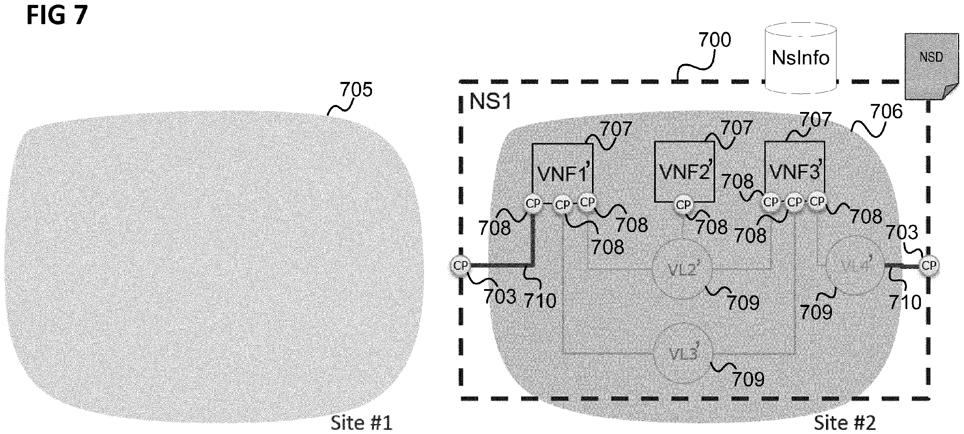

Figure 7 shows a cropping of a NS 700 for migration of the network service 700.

The network service 700 results from the network service 600 by keeping only the components at the second site 706 and removing the components at the first site 705.

Namely, once the functions of the network service 700 (e.g. user services) are operational as provided by the components 707, 708, 709 at the second site 706, optionally, the components (VNFs and VLs) at the first site can be (completely or partially) terminated, i.e. the corresponding resources can be de-allocated from providing these components.

As a result, the network service 700 is now running completely at the second site 706 and can be accessed by the external connection points 703 connected to the components of the second site 706 by connections 710 (corresponding to the connections 610 of figure 6).

In the following, various embodiments related to realization of the migration procedures, related to forms of NS migration and related to instantiation and termination of components of the NS are described which may be combined in any way.

It should further be noted that embodiments may be generalized in various ways:
1. Embodiments may be applied to a generic "network service", not only to ETSI NFV defined network services.
2. Embodiments may be applied to similar concepts such as network slicing in 5G technologies. In particular, network slicing can potentially be realized through NS usage.
3. Embodiments may be applied to both virtualized network functions (VNF) and physical network functions (PNF). In case of NSs containing PNFs, network function instantiation and termination for those PNFs requires a more manual intervention on the network function and its hardware because the network function is not virtualized. In such case, embodiments skipping the step to instantiate new VNF/PNFs and/or skipping the steps to terminate VNF/PNFs after the migration may be particularly relevant.

According to one embodiment, NS migration is controlled via the OSS (e.g. by the network operator) 102 using NS lifecycle management interface operations on the Os-Ma-nfvo reference point (see figure 1).

For this, the OSS 102 takes decisions on the specific operations required and their sequence. The OSS 102 makes several operation requests to the NFVO 106.

The NS update operation of the NS LCM (Life Cycle Management) interface may be used with sub-operation types of "addition", "removal", "instantiation", and "termination" of the VNF parts of the NS:
1. First, instantiate VNFs on the new site.
2. Second, add newly instantiated VNFs into the NS being migrated.
3. Finally, depending on whether old (original) VNFs can stay, either remove old VNFs or terminate old VNFs.

According to another embodiment, NS migration is controlled by the NFVO 106 using a migrate NS operation on the Os-Ma-nfvo reference point and adding migration procedure scripts and policies in the network service descriptor (NSD).

For this, for example, the provider (of the network service) enables an NS lifecycle script and policy in the NSD with instructions for the NFVO 106 to control the migration process. The OSS (e.g. network operator) requests an explicit NS migration operation in the NS LCM interface on the Os-Ma-nfvo reference point.

The NFVO 106 controls the NS migration process by performing the needed "addition", "delete", "instantiation" and "termination" of VNFs, but derived from the NS migration script and policies rather than from explicit operation requests by the OSS 102.

According to one embodiment, a full NS migration is performed which means that all components on the first site of an existing NS are in the end available on the second site as in the example of figure 7.

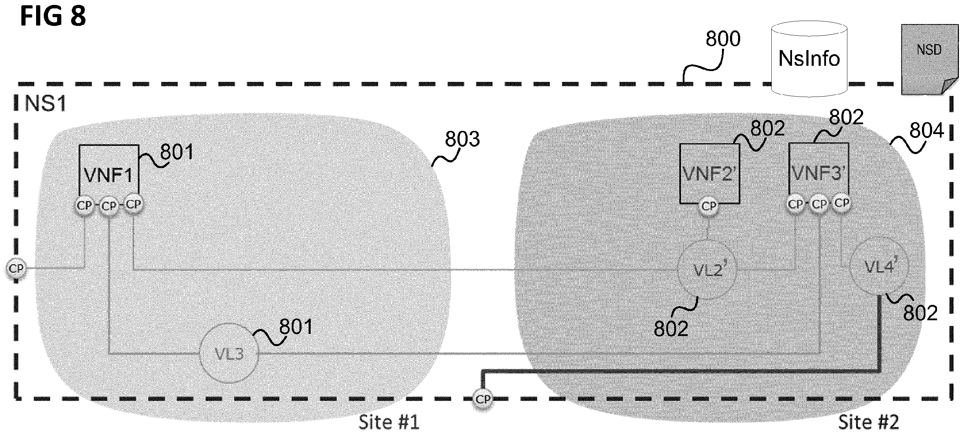

According to another embodiment, a partial NS migration is performed as illustrated in figure 8.

Figure 8 shows a network service 800 resulting from a partial NS migration.

The network service 800 comprises some components 801 on a first site 803 which were also components of the network service 800 before its migration (i.e. which are still available at the first site 803 and part of the resulting network service after migration) while the other components 802 of the original network service are available on the second site 804.

For example, the following approaches are possible for migration:
- Instantiation of all components (i.e., VNFs and VLs) on the second site. This means that allocation of resources and instantiation is performed.
- Re-usage of some or all existing components (i.e., VNFs and VLs) available on the second site and just adding them into the existing NS. This means that allocation of resources and instantiation of new VNFs and VLs for these components on the second site is not needed.
- After the NS migration, termination of all components on the first site. This means that VNFs and VLs are terminated and the corresponding resources are de-allocated.
- After the NS migration, keeping one or all components on the first site available. This means that VNFs and VLs are not terminated.
- Any combination of the above items.

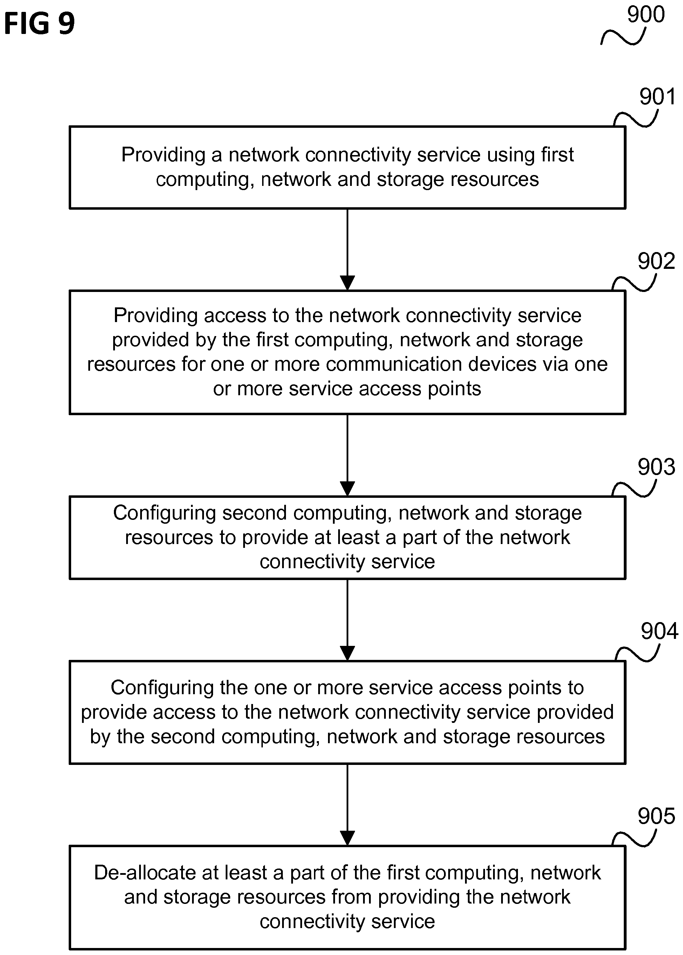

In summary, according to various embodiments, a method is provided as illustrated in figure 9.

Figure 9 shows a flow diagram 900 illustrating a method for migrating a network service (in particular for migrating a network connectivity service which is part, possibly among other services (such as higher layer services), of the network service).

In 901, a network connectivity service is provided using first computing, network and/or storage resources.

In 902, access is provided to the network connectivity service provided by the first computing, network and/or storage resources for one or more communication devices via one or more service access points.

In 903, second computing, network and/or storage resources are configured to provide at least a part of the network connectivity service.

In 904, the one or more service access points are configured to provide access to the network connectivity service provided by the second computing, network and/or storage resources.

In 905, at least a part of the first computing, network and/or storage resources are de-allocated from providing the network connectivity service.

According to various embodiments, in other words, an entity (e.g. a network service according to ETSI NFV terminology) providing a network connectivity service stays the same in terms of the service access points via which the network connectivity service may be accessed when the resources used for providing the connectivity service are changed (i.e. the network connectivity service is migrated). This can be seen to be achieved by changing the mapping of the external connection points (service access points) to internal connection points from internal connection points of service components provided by the first resources (before the migration) to corresponding internal connection points of (corresponding) service components provided by the second resources (after the migration). Furthermore, (at least a part of) the first resources may be de-allocated from providing the network connectivity service when the second resources have been configured for providing the network connectivity service. In other words, the first resources may stop providing the network connectivity service when the second resources are ready for providing the network connectivity service. This may allow a seamless migration.

The computing, network and/or storage resources may for example comprise physical compute, storage and networking resources.

A network connectivity service may be understood as a network service which provides network layer connectivity, i.e. comprises functions of the network layer (e.g. according to the OSI (Open Systems Interconnection) model) that allow establishing and using network layer (e.g. Internet Protocol) connections.

Thus, network connectivity may be seen as providing connections on a lower layer than for example a chat program, which can be seen to provide connections on the application layer.

Configuring second resources to provide at least a part of the network connectivity service may mean copying software for providing the service on first resources to second resources. This may for example be implemented by using the same virtual runtime environment or virtual machine/container (e.g. of the same type or the same product) on the first and second resources (e.g. by means of abstracting the first and second (e.g. hardware) resources). A VNF may be provided by one or more virtual machines or virtual containers running different software and processes, on top of one or more server computers, switches and storage devices, or even cloud computing infrastructure.

However, it should be noted that migrating a network service typically goes beyond a mere copying of a file from one location to another location in a storage. Migrating a network service may involve that the actual resources for, if a file for example corresponds to a program implementing a network connectivity service, executing the program change, e.g. that a different processor is used, a random access memory into which the program is loaded is used etc.

Configuring second resources to provide at least a part of the network connectivity service may further include copying configuration information from the first resources to the second resources. It may also include copying of state information from the first resources to the second resources, i.e. applying a state of the first resources to the second resources, in other words synchronizing the state of the second resources with the state of the first resources. This may for example include the state of one or more VNFs (on a higher than resource layer) that are being migrated. For example, the network connectivity service comprises functional components (e.g. virtual network functions), such as a router functionality, which are, for migrating the network connectivity service, provided by the second resources. The configuration/state of these functional components may be transferred from functional components provided by the first resources to corresponding functional components provided by the second resources, e.g. in the form of transferring parameter values representing a configuration of the functional components.

According to various embodiments, a procedure to migrate a network service from a first site to a second site (e.g. according to figure 9) does not require instantiating a new NS and terminating the existing (old) NS. For example, in an ETSI NFV context, new VNF/VL instances for providing at the second site network connectivity functions are part of the same NS.

Embodiments allow facilitating the handling of migration of network services, e.g. between geographical locations, for example for supporting network operator's requirements such as high-availability, resources capacity management, etc. The approach according to figure 9 allows avoiding disruption and impacts on the network operator's management and operations of the NS.

The migration of an NS without the need to create a new NS can be seen to result in a more "pure" NS migration in which a network service exists throughout the migration and which does not require procedures for instantiation of new NS instances and termination of old NS instances. Further, there is less effort and complexity required as it would be required for managing creation of a second NS, e.g., all service and operations fulfilment procedure steps for such a second NS are not required. Additionally, migration can be realized in a way which is transparent for the users of the NS as the external connection points (service access points) do not change from a logical point of view. Depending on the implementation, there may be no service interruption for a user (such as the user of a mobile terminal which makes use of, e.g., a routing functionality), e.g. no user or control plane connectivity disruption or the necessity for a re-attachment procedure.

The migration may for example be triggered in response to a controller which controls NS migration (e.g. an OSS or an NFVO) receiving a corresponding instruction, e.g. from an operator providing the network connectivity service or from a user of the network connectivity service, which may for example be the operator of a communication network based on the network connectivity service.

The network connectivity service may be part of a network service (that is migrated) which comprises, in addition to the network connectivity service, additional services, in particular one or more higher layer (above network layer services e.g. an application layer service such as an IMS (Internet Multimedia Subsystem). The service access points may correspond to network layer addresses but, depending on the functions and services provided by the network service, may comprise further address parts such as e.g. a port address or an SIP (session initiation protocol) address.

De-allocating at least a part of the first computing, network and/or storage resources from providing said network connectivity service may mean that only a part of the first computing, network and/or storage resources are de-allocated while the others are still used to provide the network connectivity service. This can be understood as a partial migration. Alternatively, the first computing, network and/or storage resources may all be de-allocated from providing the computing, network and/or storage resources. This may be understood as a complete migration. Thus, for example, the second computing, network and/or storage resources may be configured to completely provide the network connectivity service.

It should be noted that the steps of the method illustrated in figure 9 do not necessarily be performed in the order in which they are shown in figure 9. For example, the second computing, network and/or storage resources may be configured to provide at least a part of said network connectivity service before access is provided to the network connectivity service provided by the first computing, network and/or storage resources.

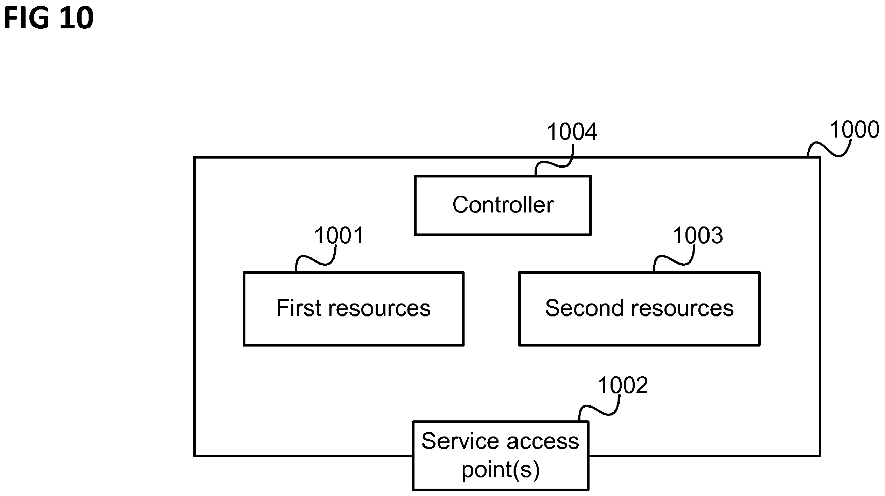

The method of figure 9 is for example carried out by an arrangement as illustrated in figure 10.

Figure 10 shows a network service arrangement 1000.

The network service arrangement 1000 comprises first computing, network and/or storage resources 1001 configured to provide a network connectivity service and one or more service access points 1002 configured to provide access to the network connectivity service provided by the first computing, network and/or storage resources 1001 for one or more communication devices.

Further, the network service arrangement 1000 comprises second computing, network and/or storage resources 1003 and a controller 1004 configured to configure the second computing, network and/or storage resources to provide at least a part of the network connectivity service, configure the one or more service access points to provide access to the network connectivity service provided by the second computing, network and/or storage resources and de-allocate at least a part of the first computing, network and/or storage resources from providing the network connectivity service.

A network service arrangement may be understood as an arrangement of computing, network and/or storage resources (possibly at different sites) to provide a network service and for example allowing migration of the network service between sites.

After configuring the one or more service access points to provide access to said network connectivity service provided by the second computing, network and/or storage resources, the one or more service access points may no longer provide access to the network connectivity service provided by the first computing, network and/or storage resources. In other words, the one or more service access points then no longer point to the first computing, network and/or storage resources.

It should be noted that while the one or more service access points may be switched from the first computing, network and/or storage resources to the second computing, network and/or storage resources there may be, in case of a partial migration, one or more other service access points which still point to the first computing, network and/or storage resources after (partial) migration.

The computing, network and/or storage hardware may for example comprise one or more computer memories and one or more processors. The computing, network and/or storage resources may provide virtual network functions. Furthermore, the computing, network and/or storage resources may correspond to physical network functions.

Various examples are described below:
Example 1 is a method for migrating a network service as illustrated in figure 9.
Example 2 is the method according to Example 1, wherein said network connectivity service comprises a plurality of functional components with connection points and communication links connecting the connection points of the functional components.
Example 3 is the method according to Example 1 or 2, comprising configuring said second computing, network and/or storage resources to provide a part of said network connectivity service in response to an instruction to add a plurality of functional components with connection points and with communication links connecting the connection points of the functional components.
Example 4 is the method according to any one of Examples 1 to 3, comprising configuring said second computing, network and/or storage resources to provide at least a part of said network connectivity service in response to an instruction to migrate the said network service.
Example 5 is the method according to Example 4, wherein the instruction to migrate said network service is an instruction to partially migrate the said network service.
Example 6 is the method according to any one of Examples 1 to 5, wherein configuring the said second computing, network and/or storage resources to provide at least a part of said network connectivity service comprises copying a state of the said first computing, network and/or storage resources to the said second computing, network and/or storage resources.
Example 7 is the method according to any one of Examples 1 to 6, wherein the first computing, network and/or storage resources and the second computing network and storage resources comprise computing, network and/or storage hardware.
Example 8 is the method according to any one of Examples 1 to 7, wherein the first computing, network and/or storage resources comprises first computing, network and/or storage hardware and the second computing network and storage resources comprises second computing, network and/or storage hardware different from the first computing, network and/or storage hardware and/or located at a different geographic location than the first computing, network and/or storage hardware.
Example 9 is the method according to any one of Examples 1 to 8, wherein said network connectivity service comprises one or more network layer functions.
Example 10 is the method according to any one of Examples 1 to 9, wherein the network layer functions comprise an Internet Protocol communication functions.
Example 11 is the method according to any one of Examples 1 to 10, wherein said network connectivity service comprises at least one of a routing functionality, a domain name service, a firewall functionality, a network layer packet filtering functionality and a network layer address translation functionality.
Example 12 is the method according to any one of Examples 1 to 11, wherein the service access points are network layer service access points.
Example 13 is the method according to any one of Examples 1 to 12, wherein said one or more service access points are network layer addresses.
Example 14 is the method according to any one of Examples 1 to 13, wherein said one or more service access points are Internet Protocol addresses.
Example 15 is the method according to any one of Examples 1 to 14, wherein said network connectivity service is a service for establishing one or more communication links between the one or more communication devices.
Example 16 is the method according to any one of Examples 1 to 15, wherein the one or more communication devices are one or more communication terminals.
Example 17 is the method according to any one of Examples 1 to 16, wherein the one or more communication devices are one or more subscriber terminals of a mobile communication network
Example 18 is the method according to any one of Examples 1 to 17, wherein configuring said one or more service access points to provide access to said network connectivity service comprises switching one or more of said service access points from pointing to the first computing, network and/or storage resources to pointing to the second computing, network and/or storage resources.
Example 19 is the method according to any one of Examples 1 to 18, wherein configuring the second computing, network and/or storage resources to provide at least a part of said network connectivity service comprises changing one or more of said service access points from being linked to functional components provided by the first computing, network and/or storage resources to being linked to functional components provided by the second computing, network and/or storage resources.
Example 20 is a network service arrangement as illustrated in figure Example 10.
Example 21 is the network service arrangement according to Example 20, wherein said network connectivity service comprises a plurality of functional components with connection points and communication links connecting the connection points of the functional components.
Example 22 is the network service arrangement according to Example 20 or 21, wherein the controller is configured to configure said second computing, network and/or storage resources to provide a part of said network connectivity service in response to an instruction to add a plurality of functional components with connection points and with communication links connecting the connection points of the functional components.
Example 23 is the network service arrangement according to any one of Examples 20 to 22, wherein the controller is configured to configure said second computing, network and/or storage resources to provide at least a part of said network connectivity service in response to an instruction to migrate the said network service.
Example 24 is the network service arrangement according to Example 23, wherein the instruction to migrate said network service is an instruction to partially migrate the said network service.
Example 25 is the network service arrangement according to any one of Examples 20 to 24, wherein configuring the said second computing, network and/or storage resources to provide at least a part of said network connectivity service comprises copying a state of the said first computing, network and/or storage resources to the said second computing, network and/or storage resources.
Example 26 is the network service arrangement according to any one of Examples 20 to 25, wherein the first computing, network and/or storage resources and the second computing network and storage resources comprise computing, network and/or storage hardware.
Example 27 is the network service arrangement according to any one of Examples 20 to 26, wherein the first computing, network and/or storage resources comprises first computing, network and/or storage hardware and the second computing network and storage resources comprises second computing, network and/or storage hardware different from the first computing, network and/or storage hardware and/or located at a different geographic location than the first computing, network and/or storage hardware.
Example 28 is the network service arrangement according to any one of Examples 20 to 27, wherein said network connectivity service comprises one or more network layer functions.
Example 29 is the network service arrangement according to any one of Examples 20 to 28, wherein the network layer functions comprise an Internet Protocol communication functions.
Example 30 is the network service arrangement according to any one of Examples 20 to 29, wherein said network connectivity service comprises at least one of a routing functionality, a domain name service, a firewall functionality, a network layer packet filtering functionality and a network layer address translation functionality.
Example 31 is the network service arrangement according to any one of Examples 20 to 30, wherein the service access points are network layer service access points.
Example 32 is the network service arrangement according to any one of Examples 20 to 31, wherein said one or more service access points are network layer addresses.
Example 33 is the network service arrangement according to any one of Examples 20 to 32, wherein said one or more service access points are Internet Protocol addresses.
Example 34 is the network service arrangement according to any one of Examples 20 to 33, wherein said network connectivity service is a service for establishing one or more communication connections between the one or more communication devices.
Example 35 is the network service arrangement according to any one of Examples 20 to 34, wherein the one or more communication devices are one or more communication terminals.
Example 36 is the network service arrangement according to any one of Examples 20 to 35, wherein the one or more communication devices are one or more subscriber terminals of a mobile communication network
Example 37 is the network service arrangement according to any one of Examples 20 to 36, wherein configuring said one or more service access points to provide access to said network connectivity service provided by the second computing, network and/or storage resources comprises switching said one or more service access points from pointing to the first computing, network and/or storage resources to pointing to the second computing, network and/or storage resources.
Example 38 is the network service arrangement according to any one of Examples 20 to 37, wherein configuring the second computing, network and/or storage resources to provide at least a part of said network connectivity service comprises changing one or more of said service access points from being linked to functional components provided by the first computing, network and/or storage resources to being linked to functional components provided by the second computing, network and/or storage resources.

According to a further example, a method for a management and orchestration entity to migrate a network service from a first resource site to second resource site is provided, the network service being composed of a set of components, the components being for example network functions and virtual links, and the method comprising:
- obtaining information by the management and orchestration entity about the current composition of the network service running on the first site and
- adding components at the second site into the network service.

According to a further example, the method for a management and orchestration entity to migrate a Network Service comprises allocating resources on the second site for the components of the said network service at the second site that replicate existing components at the first site.

According to a further example, the method for a management and orchestration entity to migrate a Network Service comprises deleting from the network service the ("old") components at the first site.

According to an example, configuring the said second computing, network and/or storage resources to provide at least a part of said network connectivity service comprises copying a state of the said first computing, network and/or storage resources to the said second computing, network and/or storage resources where the copied state comprises the information necessary to process the packets of the one or more communication devices.

The components of the network service arrangement (e.g. the computing, network and/or storage resources, the service access points and the controller etc.) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for migrating a network service comprising:
Providing a network connectivity service using first computing, network and/or storage resources;
Providing access to the said network connectivity service provided by the first computing, network and/or storage resources for one or more communication devices via one or more service access points;
Configuring second computing, network and/or storage resources to provide at least a part of said network connectivity service;
Configuring said one or more service access points to provide access to said network connectivity service provided by the said second computing, network and/or storage resources;
De-allocating at least a part of said first computing, network and/or storage resources from providing said network connectivity service.

2. The method according to claim 1, wherein said network connectivity service comprises a plurality of functional components with connection points and communication links connecting the connection points of the functional components.

3. The method according to claim 1 or 2, comprising configuring said second computing, network and/or storage resources to provide a part of said network connectivity service in response to an instruction to add a plurality of functional components with connection points and with communication links connecting the connection points of the functional components.

4. The method according to any one of claims 1 to 3, comprising configuring said second computing, network and/or storage resources to provide at least a part of said network connectivity service in response to an instruction to migrate the said network service.

5. The method according to claim 4, wherein the instruction to migrate said network service is an instruction to partially migrate the said network service.

6. The method according to any one of claims 1 to 5, wherein configuring the said second computing, network and/or storage resources to provide at least a part of said network connectivity service comprises copying a state of the said first computing, network and/or storage resources to the said second computing, network and/or storage resources.

7. The method according to any one of claims 1 to 6, wherein the first computing, network and/or storage resources and the second computing network and storage resources comprise computing, network and/or storage hardware.

8. The method according to any one of claims 1 to 7, wherein the first computing, network and/or storage resources comprises first computing, network and/or storage hardware and the second computing network and storage resources comprises second computing, network and/or storage hardware different from the first computing, network and/or storage hardware and/or located at a different geographic location than the first computing, network and/or storage hardware.

9. The method according to any one of claims 1 to 8, wherein the network layer functions comprise an Internet Protocol communication functions.

10. The method according to any one of claims 1 to 9, wherein said network connectivity service comprises at least one of a routing functionality, a domain name service, a firewall functionality, a network layer packet filtering functionality and a network layer address translation functionality.

11. The method according to any one of claims 1 to 10, wherein the service access points are network layer service access points.

12. The method according to any one of claims 1 to 11, wherein said network connectivity service is a service for establishing one or more communication links between the one or more communication devices.

13. The method according to any one of claims 1 to 12, wherein configuring said one or more service access points to provide access to said network connectivity service comprises switching one or more of said service access points from pointing to the first computing, network and/or storage resources to pointing to the second computing, network and/or storage resources.

14. The method according to any one of claims 1 to 13, wherein configuring the second computing, network and/or storage resources to provide at least a part of said network connectivity service comprises changing one or more of said service access points from being linked to functional components provided by the first computing, network and/or storage resources to being linked to functional components provided by the second computing, network and/or storage resources.

15. A network service arrangement comprising:
first computing, network and/or storage resources configured to provide a network connectivity service;
one or more service access points configured to provide access to said network connectivity service provided by the first computing, network and/or storage resources for one or more communication devices;
second computing, network and/or storage resources; and
a controller configured to
configure the second computing, network and/or storage resources to provide at least a part of said network connectivity service;
configure said one or more service access points to provide access to said network connectivity service provided by the second computing, network and/or storage resources;
de-allocate at least a part of the first computing, network and/or storage resources from providing said network connectivity service.

## Amended claims

### Amended claims in accordance with Rule 137(2) EPC.

1. A method for migrating a network service (200, 300, 400, 500, 600, 700, 800) comprising:
Providing a network connectivity service (200, 300, 400, 500, 600, 700, 800) using first computing, network and/or storage resources (1001);
Providing access to the said network connectivity service (200, 300, 400, 500, 600, 700, 800) provided by the first computing, network and/or storage resources (1001) for one or more communication devices via one or more service access points (203, 303, 403, 503, 603, 703, 1002);
Configuring second computing, network and/or storage resources (1003) to provide at least a part of said network connectivity service (200, 300, 400, 500, 600, 700, 800);
Configuring said one or more service access points (203, 303, 403, 503, 603, 703, 1002) to provide access to said network connectivity service (200, 300, 400, 500, 600, 700, 800) provided by the said second computing, network and/or storage resources (1003);
De-allocating at least a part of said first computing, network and/or storage resources (1001) from providing said network connectivity service (200, 300, 400, 500, 600, 700, 800).

2. The method according to claim 1, wherein said network connectivity service (200, 300, 400, 500, 600, 700, 800) comprises a plurality of functional components with connection points and communication links connecting the connection points of the functional components.

3. The method according to claim 1 or 2, comprising configuring said second computing, network and/or storage resources (1003) to provide a part of said network connectivity service (200, 300, 400, 500, 600, 700, 800) in response to an instruction to add a plurality of functional components with connection points and with communication links connecting the connection points of the functional components.

4. The method according to any one of claims 1 to 3, comprising configuring said second computing, network and/or storage resources (1003) to provide at least a part of said network connectivity service (200, 300, 400, 500, 600, 700, 800) in response to an instruction to migrate the said network service.

5. The method according to claim 4, wherein the instruction to migrate said network service is an instruction to partially migrate the said network service.

6. The method according to any one of claims 1 to 5, wherein configuring the said second computing, network and/or storage resources (1003) to provide at least a part of said network connectivity service (200, 300, 400, 500, 600, 700, 800) comprises copying a state of the said first computing, network and/or storage resources (1001) to the said second computing, network and/or storage resources (1003).

7. The method according to any one of claims 1 to 6, wherein the first computing, network and/or storage resources (1001) and the second computing network and storage resources (1003) comprise computing, network and/or storage hardware.

8. The method according to any one of claims 1 to 7, wherein the first computing, network and/or storage resources (1001) comprises first computing, network and/or storage hardware and the second computing network and storage resources (1003) comprises second computing, network and/or storage hardware different from the first computing, network and/or storage hardware and/or located at a different geographic location than the first computing, network and/or storage hardware.

9. The method according to any one of claims 1 to 8, wherein the network layer functions comprise an Internet Protocol communication functions.

10. The method according to any one of claims 1 to 9, wherein said network connectivity service (200, 300, 400, 500, 600, 700, 800) comprises at least one of a routing functionality, a domain name service, a firewall functionality, a network layer packet filtering functionality and a network layer address translation functionality.

11. The method according to any one of claims 1 to 10, wherein the service access points (203, 303, 403, 503, 603, 703, 1002) are network layer service access points.

12. The method according to any one of claims 1 to 11, wherein said network connectivity service (200, 300, 400, 500, 600, 700, 800) is a service for establishing one or more communication links between the one or more communication devices.

13. The method according to any one of claims 1 to 12, wherein configuring said one or more service access points (203, 303, 403, 503, 603, 703, 1002) to provide access to said network connectivity service (200, 300, 400, 500, 600, 700, 800) comprises switching one or more of said service access points (203, 303, 403, 503, 603, 703, 1002) from pointing to the first computing, network and/or storage resources (1001) to pointing to the second computing, network and/or storage resources (1003).

14. The method according to any one of claims 1 to 13, wherein configuring the second computing, network and/or storage resources (1003) to provide at least a part of said network connectivity service (200, 300, 400, 500, 600, 700, 800) comprises changing one or more of said service access points (203, 303, 403, 503, 603, 703, 1002) from being linked to functional components provided by the first computing, network and/or storage resources (1001) to being linked to functional components provided by the second computing, network and/or storage resources (1003).

15. A network service arrangement comprising:
first computing, network and/or storage resources configured to provide a network connectivity service (200, 300, 400, 500, 600, 700, 800);
one or more service access points (203, 303, 403, 503, 603, 703, 1002) configured to provide access to said network connectivity service (200, 300, 400, 500, 600, 700, 800) provided by the first computing, network and/or storage resources (1001) for one or more communication devices;
second computing, network and/or storage resources (1003); and
a controller (1004) configured to
configure the second computing, network and/or storage resources (1003) to provide at least a part of said network connectivity service (200, 300, 400, 500, 600, 700, 800);
configure said one or more service access points (203, 303, 403, 503, 603, 703, 1002) to provide access to said network connectivity service (200, 300, 400, 500, 600, 700, 800) provided by the second computing, network and/or storage resources (1003);
de-allocate at least a part of the first computing, network and/or storage resources (1001) from providing said network connectivity service (200, 300, 400, 500, 600, 700, 800).
